# FASCICULE DE BREVET EUROPEEN

(11) **EP 2 009 333 B1**
(45) Date de publication et mention de la délivrance du brevet: **23.12.2015**
(21) Numéro de dépôt: 08158906.1
(22) Date de dépôt: 24.06.2008
(51) Int. Cl.: F16J 15/32, F02C 7/28

(54) **Joint à brosse dynamique**
Dynamische Bürstendichtung
Dynamic brush seal

(30) Priorité: 29.06.2007 FR 0756153
(43) Date de publication de la demande: 31.12.2008
(73) Titulaire: SNECMA, 75015 Paris (FR)
(72) Inventeur: Plona, Daniel, Georges, 77870, VULAINES/SEINE (FR)
(74) Mandataire: Ilgart, Jean-Christophe

(56) Documents cités:
- EP-A- 0 576 316
- EP-A- 1 559 873
- DE-A1- 3 907 614
- GB-A- 2 250 790
- GB-A- 2 291 939

## Description

### DOMAINE TECHNIQUE

L'invention concerne un ensemble de joint à brosse dynamique pour assurer une étanchéité entre un rotor et un stator, et une turbine ou un compresseur comportant un tel joint et une turbomachine comportant une telle turbine ou un tel compresseur.

Des joints à brosse de ce type sont utilisés notamment pour réaliser une étanchéité entre une enceinte contenant de l'air et une enceinte contenant un mélange d'air et d'huile ou une étanchéité entre deux enceintes contenant de l'air au niveau des compresseurs haute et basse pression et au niveau des turbines hautes et basses pression.

Plus précisément l'invention concerne un joint à brosse constitué de soies non métalliques, apte à assurer une étanchéité d'un entrefer entre un rotor et un stator comportant un boîtier pour les soies fixé sur le rotor ou sur le stator, les soies étant soumises, sur une face, à une pression amont et sur une autre face à une pression aval, la pression amont étant supérieure à la pression aval.

Les joints actuellement utilisés dans ces applications sont des joints de type labyrinthe qui comportent des dents annulaires appelées léchettes matérialisant vis-à-vis d'un anneau en matériau plus tendre appelé abradable une pluralité de restrictions de section générant une perte de charge et donc une réduction du débit. Avec un tel joint, la perméabilité en air est importante, en conséquence, la turbomachine consomme de l'huile ce qui entraîne des coûts et est en outre toxique pour l'environnement.

On connaît par ailleurs (EP 1 517 006) un joint à brosse qui assure l'étanchéité de la cavité de prélèvement d'air à la cabine. Cette cavité est délimitée d'une part par une virole externe du compresseur et une structure annulaire raccordée à la virole et, d'autre part, par le carter externe de la grille de diffuseur un jambage raccordé au carter externe et une virole externe de carter moteur. Le joint comporte des soies qui s'étendent radialement vers l'extérieur et qui sont en appui sur la surface interne d'un manchon cylindrique solitaire de la structure annulaire et entourant le joint à brosse. Toutefois, un joint de ce type réalise une étanchéité statique dans laquelle les problèmes d'usure ne se posent pas.

On connaît également (US 5 400 586) un joint à brosse auto-adaptateur pour une chambre à combustion d'une turbine à gaz. La turbine à gaz comporte une chambre de combustion comportant à son extrémité de sortie une pièce de transition espacée d'une tuyère de premier étage. Un joint à brosse réalise une étanchéité entre la pièce de transition et la tuyère de premier étage. Le joint comporte une virole d'étanchéité supportée soit par la pièce de transition soit par la tuyère de premier étage. Un joint d'étanchéité comporte de soies qui entrent en contact avec la virole d'étanchéité pour rendre étanche l'espace compris entre la pièce de transition et la tuyère de premier étage. Un joint de ce type réalise également une étanchéité statique et les problèmes d'usure du joint ne se pose pas.

On connaît encore des joints à brosse métallique qui ont fait l'objet d'applications aux turbomachines depuis les années 50. Le point le plus important à noter sur cette technologie est la nécessité d'arc-bouter les poils sur une barrière résistante à la pression (la bague arrière). La conséquence est un raidissement des brosses proportionnel à la pression appliquée qui peut provoquer une usure accélérée des brosses si le jeu vient à s'annuler dans ces conditions. Le moindre contact avec le rotor entraîne une usure rapide du joint et une dégradation des caractéristiqes d'étanchéité.

Le document GB 2 291 939 décrit un joint à brosses comprenant des soies non métalliques, apte à assurer une étanchéité d'un entrefer entre un rotor et un stator comprenant un boîtier pour les soies fixé sur le stator, les soies étant soumises, sur une face, à une pression amont et sur une autre face à une pression aval, les soies étant en appui sur le rotor de manière à être inclinées du côté du joint où règne la pression la plus faible, conforme au préambule de la revendication 1.

La présente invention a pour objet un joint à brosse dynamique qui remédie aux inconvénients de l'art antérieur. Ces buts sont atteints conformément à l'invention par les caractéristiqes des revendications 1, 9 et 10.

Grâce à cette caractéristique, l'élasticité des soies qui assurent une pression de contact sur le rotor ou le stator est contre-balancée par la poussée aérodynamique qui soulève les soies de leur siège, ce qui a pour effet de minimiser la pression de contact sur le rotor ou le stator. Ainsi, l'usure du joint est rendue aussi faible que possible.

En régime de croisière un léger jeu subsiste par lequel circule un mince flux d'air, mais l'huile contenue dans le mélange air-huile (de l'air avec un brouillard d'huile) est retenue du côté aval du joint de sorte que les fuites d'huile sont complètement évitées.

Dans une réalisation particulière, le boîtier comporte une enveloppe interne sur laquelle les soies sont enroulées et une enveloppe externe qui entoure les soies.

Avantageusement le joint à brosse comporte une bague amont et une bague aval disposée entre l'enveloppe externe et les soies.

Avantageusement l'enveloppe interne et l'enveloppe externe présentent une forme de C.

Dans une réalisation préférée le joint à brosse comporte un ressort hélicoïdal disposé au centre de l'enveloppe interne, tout type d'anneau élastique peut également assurer cette fonction.

Dans une réalisation particulière, la bague aval comporte un chanfrein.

De préférence, le joint à brosse est monté sur un support, ledit support comportant un logement dans lequel est reçu le boîtier et un jonc d'arrêt pour immobiliser le boîtier dans le logement.

Dans une réalisation particulière, la bague aval est plus courte que le support et le support présente un rayon sur lequel les soies viennent en appui pour prendre une forme incurvée.

De préférence, le jonc d'arrêt écrase le boîtier de manière à assurer, par la déformation du boîtier, une étanchéité statique entre le boîtier et le logement du boîtier.

Par ailleurs, l'invention concerne une turbine ou un compresseur de turbomachine comportant un joint à brosse conforme à l'invention.

Enfin, l'invention concerne une turbomachine comportant une turbine et/ou un compresseur équipé d'un joint à brosse suivant l'invention.

D'autres caractéristiques et avantages de l'invention apparaîtront encore à la lecture de la description qui suit d'exemples de réalisation donnés à titre illustratif en référence aux figures annexées. Sur ces figures :
- la figure 1 représente une vue en perspective d'un joint à brosse conforme à la présente invention ;
- la figure 2 représente une vue schématique en coupe qui illustre la courbure de la brosse ;
- la figure 3A est une vue de détail qui montre la pression de contact des brosses sur le rotor ;
- la figure 3B est une vue de détail qui montre le décollement des brosses du rotor ;
- la figure 4 est une courbe qui représente le taux d'usure en fonction de la pression des brosses sur le rotor ;
- la figure 5 est une variante du joint d'étanchéité représenté sur la figure 1 comportant un champ frein sur la bague arrière ;
- la figure 6 est une vue en perspective qui montre le joint monté dans son logement ;
- la figure 7 est une variante dans laquelle le joint comporte une bague arrière courte et dans laquelle le logement comporte un rayon de support des soies.

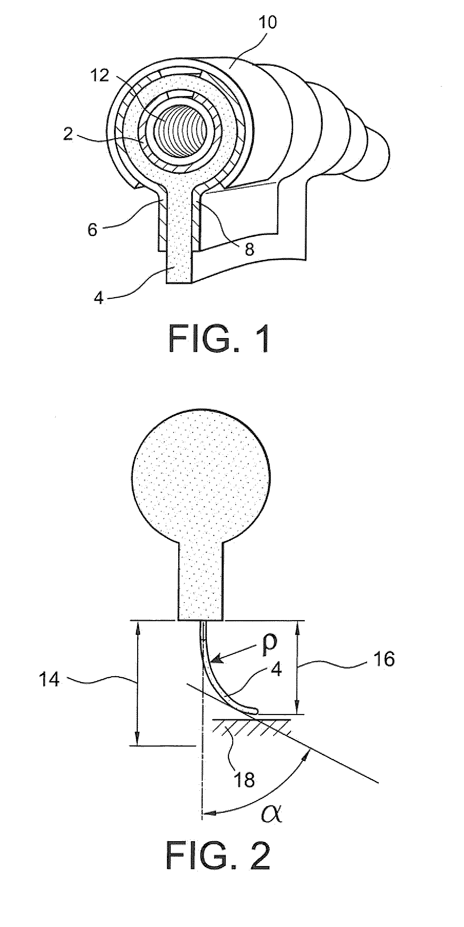

Sur la figure 1 le joint à brosse comporte une enveloppe interne 2 en forme de C ouvert vers le haut. Les soies 4 formant la brosse sont enroulées sur cette enveloppe interne. Les soies sont maintenues par une bague amont 6 et une bague aval 8. La bague amont 6 et la bague aval 8 sont maintenues en place par une enveloppe externe 10 présentant la forme C ouvert vers le bas. En outre, un ressort hélicoïdal 12 est présent à l'intérieur de l'enveloppe interne 2. Cette dernière prend appui sur le ressort hélicoïdal 12. L'angle α est comprit entre 5° et 45° et de préférence entre 10° et 30°.

La brosse est constituée de poils de carbone d'un diamètre de 6 µm environ. L'épaisseur de la nappe varie entre un millimètre et 4 millimètres selon les applications.

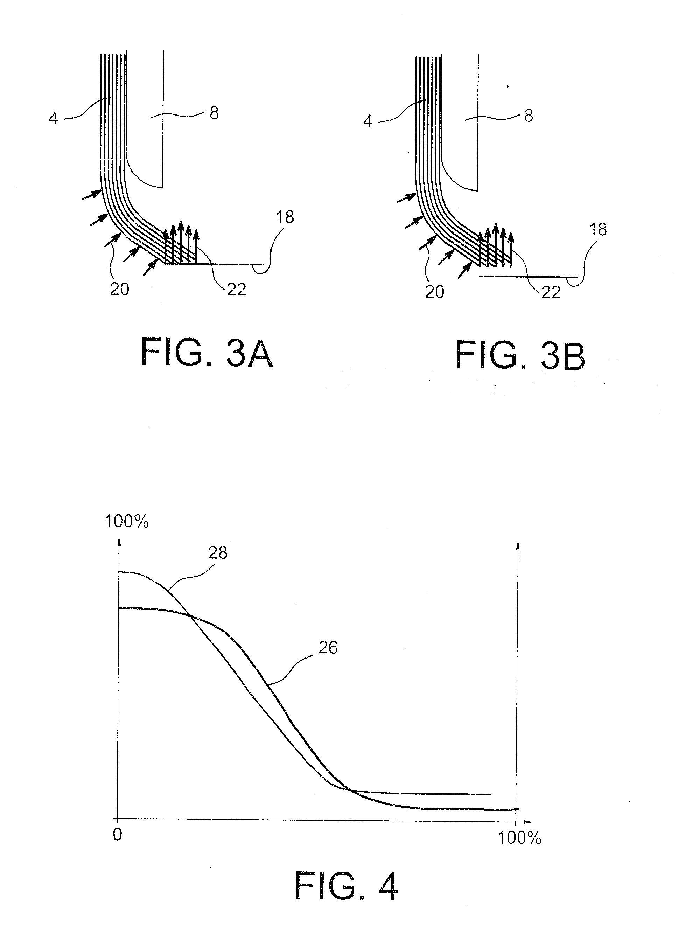

On a illustré sur la figure 2 le montage du joint. La référence 14 désigne la longueur libre des poils 4 tandis que la référence 16 représente la hauteur sous bague arrière des poils 4 incurvés prenant appui sur le rotor 18. L'angle des poils par rapport à une perpendiculaire à la surface du rotor 18 est désigné par α. Le rayon de courbure des poils a leur extrémité incurvée désignés par la lettre p. L'enveloppe interne 2, l'enveloppe externe 10, les bagues amont et aval 6, 8 constituent un boîtier. Sur la figure 3A, les poils 4 prennent appui sur le rotor 18. Les poils sont soumis à une pression amont et à pression avale dont la différence constitue une pression différentielle 20. Les poils 4 exercent une pression de contact 22 sur le rotor 18. Cette pression de contact 22 est diminuée par la pression différentielle 20 qui tend à soulever les poils du rotor 18. Contrairement aux joints à brosse métallique, l'invention ne cherche pas à lutter contre la pression en arc-boutant les poils contre la bague arrière. Le jeu de bague arrière est même dimensionné de manière à ce que la nappe puisse migrer entre le rotor et celle-ci.

Comme représenté sur la figure 3B, les poils peuvent se soulever de leur appui sur le rotor 18. Il existe alors un léger jeu entre l'extrémité des poils et le rotor 18 et un débit de fuite se produit dans ce jeu. La présente invention permet de gérer ce débit de fuite.

Dès le montage, il y a déflexion des brosses sous la bague arrière 8. Les efforts aérodynamiques s'exercent librement en fonctionnement sur la nappe et peuvent soulever celle-ci du rotor pour des pressions différentielles élevées. La caractéristique de perméabilité est du coup fortement dégradée au-dessus 2,5 bars mais on obtient une usure qui devient dégressive avec la pressurisation. On adapte la raideur de la brosse à la pression à étancher de manière à minimiser en fonctionnement en croisière la pression de contact et donc l'usure du joint.

On a représenté sur la figure 4 une courbe qui illustre la variation du taux d'usure 26 en fonction de la pression des brosses sur le rotor 28. Comme on le constate, le taux d'usure suit sensiblement la pression des brosses sur le rotor. Pour une pression des brosses égales à 100%, le taux d'usure est maximum puis le taux d'usure décroît avec la pression des brosses sur le rotor pour atteindre une valeurs minimale lorsque la pression des brosses sur le rotor est à son minimum.

En résumé, les joints sont efficaces seulement à basse pression. Le fonctionnement le plus nocif pour la durée de vie du contact rotor/stator est le ralenti. La faible vitesse de glissement dans ces conditions garantit pour de nombreuses applications un taux d'usure réduit.

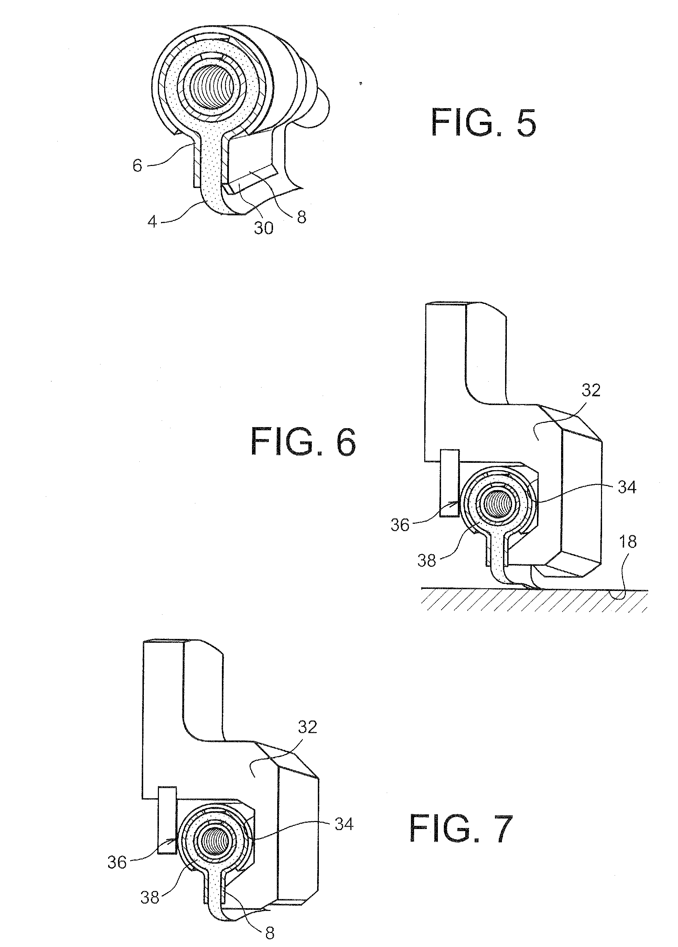

La figure 5 représente une variante de réalisation dans laquelle la bague avale 8 comporte un chanfrein 30. Ce chanfrein a pour fonction de faciliter l'inclinaison des brosses et de réduire les risque de cisaillement des soies. On remarque en outre sur la figure 5 que les poils ne sont pas de la même longueur. Ceci découle notamment du fait que l'extrémité des poils a été représentée de manière pointue sur la figure 5.

La figure 6 illustre la manière dont le boîtier du joint d'étanchéité est monté sur un support 32. Le support comporte un logement 34 dans lequel est reçu le boîtier. Un jonc d'arrêt 36 immobilise le boîtier dans le logement 34. Conformément à une caractéristique de l'invention, le jonc d'arrêt 36 est disposé de telle manière à écraser légèrement le boîtier afin de l'ovaliser et d'appliquer sa partie supérieure 38 contre la surface du logement 34 de manière à réaliser une étanchéité statique entre le boîtier et le logement.

On a représenté sur la figure 7 une variante de réalisation dans laquelle la bague aval 8 a été raccourcie. Le logement 32 comporte un arrondi 38 sur lequel les poils 4 viennent prendre appui. La fonction de l'arrondi 38 est donc similaire à celle du chanfrein 30 du mode de réalisation représenté sur la figure 5. Il a pour but de faciliter l'inclinaison de l'extrémité libre des poils.

## Revendications

1. Joint à brosse comprenant des soies non métalliques et un boîtier pour les soies (4), le joint étant apte à assurer une étanchéité d'un entrefer entre un rotor (18) et un stator
le boîtier apte à être fixé sur le rotor ou sur le stator,
les soies étant configurées pour être soumises, sur une face, à une pression amont et sur une autre face à une pression aval, la pression amont étant supérieure à la pression aval, les soies (4) étant configurées pour être en appui sur le stator ou le rotor (18) de manière à être inclinées du côté du joint où règne la pression la plus faible, à savoir la pression aval,
le boîtier comportant une enveloppe interne (2) sur laquelle les soies sont enroulées et une enveloppe externe (10) qui entoure les soies,
**caractérisé en ce que** le boîtier comporte en outre une bague amont (6) et une bague aval (8), la bague amont (6) et la bague aval (8) étant disposées entre l'enveloppe externe (10) et les soies (4)

2. Joint à brosse suivant la revendication 1, **caractérisé en ce que** les soies (4) sont inclinées dans le sens de l'écoulement d'un angle α compris entre 5° et 45° et de préférence entre 10° et 30°.

3. Joint à brosse suivant la revendication 1 ou 2, **caractérisé en ce que** l'enveloppe interne (2) et l'enveloppe externe (10) présentent une forme de C.

4. Joint à brosse suivant la revendication 3, **caractérisé en ce qu'**il comporte un ressort hélicoïdal (12) disposé au centre de l'enveloppe interne (2).

5. Joint à brosse suivant l'une des revendications précédentes, **caractérisé en ce que** la bague aval (8) comporte un chanfrein (30).

6. Ensemble d'un support (32) et d'un joint à brosse suivant l'une des revendications 1 à 5, **caractérisé en ce que** le joint est monté sur le support (32), ledit support comportant un logement (34) dans lequel est reçu le boîtier et un jonc d'arrêt (36) pour immobiliser le boîtier dans le logement (34).

7. Ensemble suivant la revendication 6, **caractérisé en ce que** la bague aval (8) est plus courte que le support (32) et **en ce que** le support présente un rayon (38) sur lequel les soies (4) viennent en appui pour prendre une forme incurvée.

8. Ensemble suivant la revendication 7, **caractérisé en ce que** le jonc d'arrêt (36) écrase le boîtier de manière à assurer, par la déformation du boîtier, une étanchéité statique entre le boîtier et le logement (34) du boîtier.

9. Turbine ou compresseur de turbomachine **caractérisé en ce qu'**il comporte un joint à brosse et/ou un ensemble selon l'une des revendications 1 à 8.

10. Turbomachine, **caractérisée en ce qu'**elle comporte une turbine et/ou un compresseur suivant la revendication 9.

## Patentansprüche

1. Bürstendichtung mit nicht metallischen Fasern und einem Gehäuse für die Fasern (4), wobei die Dichtung in der Lage ist, eine Dichtheit eines Luftspaltes zwischen einem Rotor (18) und einem Stator sicherzustellen,
wobei das Gehäuse an dem Rotor oder an dem Stator befestigt werden kann, wobei die Fasern derart ausgeführt sind, dass sie auf einer Seite einem stromaufwärtigen Druck und auf einer anderen Seite einem stromabwärtigen Druck ausgesetzt sind, wobei der stromaufwärtige Druck höher als der stromabwärtige Druck ist, wobei die Fasern (4) so ausgeführt sind, dass sie derart auf dem Stator oder dem Rotor (18) aufliegen, dass sie auf der Seite der Dichtung geneigt sind, wo der geringste Druck vorherrscht, nämlich der stromabwärtige Druck,
wobei das Gehäuse eine innere Umhüllung (2), an der die Fasern aufgerollt sind, und eine äußere Umhüllung (10) aufweist, die die Fasern umgibt,
**dadurch gekennzeichnet, dass** das Gehäuse außerdem einen stromaufwärtigen Ring (6) und einen stromabwärtigen Ring (8) aufweist, wobei der stromaufwärtige Ring (6) und der stromabwärtige Ring (8) zwischen der äußeren Umhüllung (10) und den Fasern (4) angeordnet sind.

2. Bürstendichtung gemäß Anspruch 1, **dadurch gekennzeichnet, dass** die Fasern (4) in der Strömungsrichtung in einem Winkel α zwischen 5° und 45° und bevorzugt zwischen 10° und 30° geneigt sind.

3. Bürstendichtung gemäß Anspruch 1 oder 2, **dadurch gekennzeichnet, dass** die innere Umhüllung (2) und die äußere Umhüllung (10) eine C-Form aufweisen.

4. Bürstendichtung gemäß Anspruch 3, **dadurch gekennzeichnet, dass** diese eine Schraubenfeder (12) aufweist, die in der Mitte der inneren Umhüllung (2) angebracht ist.

5. Bürstendichtung gemäß einem der vorhergehenden Ansprüche, **dadurch gekennzeichnet, dass** der stromabwärtige Ring (8) eine Fase (30) aufweist.

6. Anordnung bestehend aus einer Halterung (32) und einer Bürstendichtung gemäß einem der Ansprüche 1 bis 5, **dadurch gekennzeichnet, dass** die Dichtung an der Halterung (32) angebracht ist, wobei die Halterung eine Aufnahme (34) aufweist, in der das Gehäuse und ein Sicherungsring (36) zur Festsetzung des Gehäuses in der Aufnahme (34) aufgenommen sind.

7. Anordnung gemäß Anspruch 6, **dadurch gekennzeichnet, dass** der stromabwärtige Ring (8) kürzer als die Halterung (32) ist und dass die Halterung einen Bereich (38) aufweist, auf dem die Fasern (4) zur Auflage kommen, um eine gekrümmte Form anzunehmen.

8. Anordnung gemäß Anspruch 7, **dadurch gekennzeichnet, dass** der Sicherungsring (36) das Gehäuse derart zusammendrückt, dass durch die Verformung des Gehäuses eine statische Dichtheit zwischen dem Gehäuse und der Aufnahme (34) des Gehäuses gewährleistet wird.

9. Turbine oder Kompressor einer Turbomaschine, **dadurch gekennzeichnet, dass** diese/r eine Bürstendichtung und/oder eine Anordnung gemäß einem der Ansprüche 1 bis 8 umfasst.

10. Turbomaschine, **dadurch gekennzeichnet, dass** diese eine Turbine und/oder einen Kompressor gemäß Anspruch 9 umfasst.

## Claims

1. Seal with brush comprising non-metallic textile insulators and a container for the insulators (4), the seal being capable of providing a seal for an air gap between a rotor (18) and a stator, the container being adapted to be fixed on the rotor or on the stator,
the textile insulators being configured to be subjected, on one side, to an upstream pressure and on another side to a downstream pressure, the upstream pressure being greater than the downstream pressure, the textile insulators (4) being configured to be supported on the stator or the rotor (18) so as to be at an angle to the side of the seal where the pressure is lower, namely the downstream side,
the container incorporating an internals envelope (2) on which the textile insulators are wound and an external envelope (10) which surrounds the textile insulators,
**characterized in that** the container further incorporates an upstream ring (6) and a downstream ring (8) placed between the external envelope (10) and the textile insulators (4).

2. Seal with brush according to claim 1, **characterised in that** the textile insulators (4) are inclined in the direction of the flow at an angle α between 5° and 45° inclusive, and more preferably between 10° and 30°.

3. Seal with brush according to claim 1 or claim 2, **characterised in that** the internal envelope (2) and the external envelope (10) have a C shape.

4. Seal with brush according to claim 3, **characterised in that** it incorporates a helical spring (12) placed at the centre of the internal envelope (2).

5. Seal with brush according to one of the preceding claims, **characterised in that** the downstream ring (8) incorporates a chamfer (30).

6. Assembly comprising a support (32) and a seal with brush according to one of claims 1 to 5, **characterised in that** the seal is mounted on a support (32), said support incorporating a housing (34) in which are accommodated the container and a stop (36) to immobilise the container in the housing (34).

7. Assembly comprising a support (32) and a seal with brush according to claim 6, **characterised in that** the downstream ring (8) is shorter than the support (32) and **in that** the support has a shelf (38) on which the textile insulators (4) are supported to assume a dished shape.

8. Assembly comprising a support (32) and a seal with brush according to claim 7, **characterised in that** the stop (36) crushes the container so as to provide, by the distortion of the container, a static seal between the container and the housing (34) of the container.

9. Turbine or turbomachine compressor, **characterised in that** it incorporates a seal with brush and/or an assembly according to one of claims 1 to 8.

10. Turbomachine, **characterised in that** it incorporates a turbine and/or a compressor according to claim 9.
